**Europäisches Patentamt**

**European Patent Office**

**Office européen des brevets**

(19)

(11) Veröffentlichungsnummer: **0 170 176**
**B1**

(12) **EUROPÄISCHE PATENTSCHRIFT**

(45) Veröffentlichungstag der Patentschrift: **04.07.90**

(21) Anmeldenummer: **85109085.2**

(22) Anmeldetag: **20.07.85**

(51) Int. Cl.⁵: **F 16 D 69/02**

(54) **Zusatz für Reibbelagmischungen.**

(30) Priorität: **01.08.84 DE 3428347**

(43) Veröffentlichungstag der Anmeldung:
**05.02.86 Patentblatt 86/06**

(45) Bekanntmachung des Hinweises auf die
Patenterteilung:
**04.07.90 Patentblatt 90/27**

(84) Benannte Vertragsstaaten:
**AT BE DE FR GB IT NL**

(56) Entgegenhaltungen:
**DE-B-3 513 031**
**US-A-3 574 658**

(73) Patentinhaber: **TUNAP Industrie Chemie GmbH
& Co. KG**
**Bürgermeister-Seidl-Strasse 2**
**D-8190 Wolfratshausen (DE)**

(73) Patentinhaber: **Degussa Aktiengesellschaft**
**Weissfrauenstrasse 9**
**D-6000 Frankfurt am Main 1 (DE)**

(72) Erfinder: **Sprügel, Friedrich**
**Solalindenstrasse 36 b**
**D-8000 München 82 (DE)**
Erfinder: **Panster, Peter, Dr.**
**Im Lochseif 8**
**D-6458 Rodenbach (DE)**

Courier Press, Leamington Spa, England.

EP 0 170 176 B1

**Beschreibung**

Die Erfindung betrifft einen Zusatz für Reibbelagmischungen, mit dem deren Reibung und Abrieb gezielt eingestellt werden kann. Insbesondere ermöglicht der Zusatz auch die Verwendung asbestfreier Reibbelagmischungen für hochbelastete Reibungsflächen in mechanischen Konstruktionselementen, wie Bremsen, Kupplungen, Synchrongetrieben o.ä.

Es ist bereits bekannt, Ausgangsmischungen für Reibbeläge Trochenschmiermittel und Füllstoffe in Form eines Additivs zuzusetzen, um eine einwandfreie Funktion, z. B. hinsichtlich einer lange andauernden Aufrechterhaltung eines konstant hohen Reibbeiwerts über einen breiten Temperaturbereich zu ermöglichen. Gleichzeitig wird dabei ein geringer Abrieb von Belag und Gegenelement angestrebt. Nebenerscheinungen, wie ein hoher Geräuschpegel durch Ruckgleiten oder übermäßige Rückstandsbildung, insbesondere auf dem Gegenelement, sollten dabei weitgehend vermieden werden.

Ein solches Additiv enthält z. B. Graphit, ein keramisches Pulver, ein Metall- oder Metalloxidpulver und ein wärmehärtbares Phenolharz und wird einer üblichen Reibbelagmischung in Mengen von 1,5—20 Vol.% zugesetzt (siehe NL—A—66 12 920).

Übliche Reibbelagmischungen enthalten als Hauptbestandteile Stoffe mit hohen Reibungskoeffizienten, strukturbildende Stoffe (wie Asbestfaser), wärmeableitende Stoffe, organische und/oder anorganische Bindemittel sowie reibungs- und abriebsteuernde Zusätze als Einzelsubstanz oder in einer Abmischung.

Als Einzelsubstanz ist z. B. schon $MoS_2$ für sogenannte Semimetallic-Beläge, in denen die Asbestfasern durch metallhaltige Komponenten ersetzt sind, vorgeschlagen worden (SAE paper 790717 "Controlled Friction Additives for Brake Pads and Clutches" von H. M. Schiefer und G. V. Kubczak).

Die bisher meist verwendeten asbest-haltigen Reibbeläge stellen, wie relativ spät erst erkannt worden ist, für die öffentliche Gesundheit wegen der Freisetzung von faserigem Asbeststaub ein erhebliches Risiko dar, so daß man heute überall bestrebt ist, den Asbest aus Anwendungen zu eliminieren, bei denen er als Faser freigesetzt werden kann.

Bei asbestfreien Reibbelägen stellte sich dabei die Aufgabe, die komplexen Wirkungen der Asbestkomponente im Belag durch geeignete Stoffe auszugleichen. In vielen Fällen war man daher gezwungen, die Zusammensetzung der Reibbeläge stark zu ändern, also z. B. anstelle von Asbest Baumwoll-, Glas- oder Kohlenstoff-Fasern, Aramidfasern, Wollastonitfasern, Stahlwolle, Keramikfasern, Ton, Mica oder Diatomeenerde zu verwenden (Industrial Research & Development—July 1983, S. 88 ff.).

Alle bislang angestellten Bemühungen, zu weitgehend oder völlig asbestfreien Reibbelägen mit dem gewohnten Eigenschaftsbild der asbesthaltigen Reibbeläge zu gelangen, führten zu Produkten, die dem geforderten hohen Standard in bezug auf Abrieb- und Verschleißfestigkeit nur bedingt genügten.

Gemäß der Erfindung wird nun ein reibungs- und abriebsteuernder Zusatz für Reibbelagmischungen, insbesondere asbestfreie Reibbelagmischungen vorgestellt, mit dem das gesteckte Ziel erreicht und in manchen Fällen sogar noch übertroffen werden kann.

Gegenstand der Erfindung ist demgemäß ein Zusatz für Reibbelagmischungen, welcher dadurch gekennzeichnet ist, daß er ganz oder teilweise aus $TiS_2$ besteht.

Die mit diesem Zusatz erzielbaren Ergebnisse sind um so überraschender, als $TiS_2$ eine luft- und feuchtigkeitsempfindliche sowie thermisch relativ leicht zersetzliche Substanz ist.

So findet z. B. schon bei Raumtemperatur eine partielle Oxidation zu einer oxidischen Verbindung und bei Kontakt mit Feuchtigkeit eine Freisetzung von Schwefelwasserstoff statt. Bei thermischer Belastung an Luft kann eine erhebliche Zersetzung schon bei Temperaturen ab 150°C erfolgen und selbst unter Schutzgasatmosphäre ist eine deutliche Zersetzung unter Schwefelabgabe bei Temperaturen oberhalb 250°C festzustellen.

Indessen ist anzunehmen, daß sich gerade diese besonderen Eigenschaften des $TiS_2$ vorteilhaft in den Reibbelagkompositionen auswirken, wenn dieser Stoff in relativ niedrigen Konzentrationen (bevorzugt wird ein Bereich bis 2 Gew.%) in einer Reibbelagmischung vorliegt.

Dabei kann in Abhängigkeit von der Grundkomposition des Reibbelags das $TiS_2$ entweder als solches oder in Form einer Abmischung mit anderen Stoffen, insbesondere sogenannten Festschmierstoffen, wie Antimonsulfide, Aluminiumphosphate u. ä. eingebracht werden.

Eine vorteilhafte Ausbildung der Erfindung sieht vor, daß der reinbungs- und abriebsteuernde Zusatz aus einer Mischung von $TiS_2$ mit einem Sulfid der 2. Nebengruppe des Periodensystems, einem Phosphat des Magnesiums, Calciums, Bors, Aluminiums, Kupfers oder Eisens und synthetischem Graphit besteht.

Mit Vorteil verwendbare Sulfide der 2. Nebengruppe umfassen z. B. ZnS mit Wurtzit-Struktur, CdS mir Wurtzit-Struktur (z. B. erhältlich durch Glühen der hexagonal kristallisierenden Form) sowie HgS in Form des hexagonalen Zinnobers.

Von den Phosphaten des Magnesiums und Calciums sind beispielsweise die Verbindungen $Mg_3(PO_4)_2$, $Ca(H_2PO_4)_2$, $Ca_3(PO_4)_2$, $Ca_4P_2O_9$ und $Ca_5P_6O_{20}$, von den Phosphaten des Bors und Aluminiums die Verbindungen $BPO_4$, $AlPO_4$ sowie Aluminiumpyro- und polyphosphate und von den Phosphaten des Kupfers und Eisens die Verbindungen $Cu_3(PO_4)_2$, $Cu_2P_2O_7$, $FePO_4$, $Fe_2P_2O_7$ und $Fe_4(P_2O_7)_3$ gut geeignet, was auf ihre Wasserunlöslichkeit und Temperaturstabilität zurückzuführen sein dürfte.

Grundsätzlich könnten auch verwandte kristallwasserhaltige Verbindungen in die Bremsbelagmischungen eingearbeitet werden, denn durch die bei der Belagfertigung angewandten Härtungstemperaturen tritt Entwässerung ein, wobei die wasserfreien Salze unlöslich werden.

Wegen der hohen thermischen Stabilität hat sich als Sulfid das ZnS mit Wurtzitgitter und als Phosphat das Tricalciumphosphat $Ca_3(PO_4)_2$ als besonders vorteilhaft erwiesen.

Varianten des erfindungsgemäßen Zusatzes für Reibbelagmischungen mit welcher ausgezeichnete asbesthaltige, aber vor allem asbestfreie Reibbeläge hergestellt werden können, bestehen aus

5—30 Gew. % $TiS_2$
10—30 Gew. % ZnS (Wurtzit-Gitter)
5—30 Gew. % $Ca_3(PO_4)_2$
10—80 Gew. % Graphit (synthetisch)

oder vorzugsweise

10—15 Gew. % $TiS_2$
10—30 Gew. % ZnS (Wurtzit-Gitter)
10—15 Gew. % $Ca_3(PO_4)_2$
40—70 Gew. % Graphit (synthetisch)

oder insbesondere

8—12 Gew. % $TiS_2$
20—25 Gew. % ZnS (Wurtzit-Gitter)
8—12 Gew. % $Ca_3(PO_4)_2$
51—64 Gew. % Graphit (synthetisch)

Ein weiterer Gegenstand der Erfindung betrifft die Verwendung des beschriebenen Zusatzes in asbestfreien Reibbelagmischungen und Reibbelägen.

Die unter Verwendung des erfindungsgemäßen Zusatzes erhältlichen asbestfreien Reibbeläge zeichnen sich durch eine höhere Reibungszahl gegenüber üblichen asbesthaltigen Belägen bei gleichzeitig vermindertem Abrieb und erhöhter Temperaturbeständigkeit bei Langzeitbetrieb aus. Gegenüber bereits bekannt gewordenen asbestfreien Belägen, welche bislang allenfalls eine Leistung von ca. 80% eines optimalen asbesthaltigen Belages erbrachten, ist der Vorteil um so größer. Diese Aussage wird nachfolgend anhand eines Vergleichsbeispiels belegt, bei dem ein den erfindungsgemäßen Zusatz enthaltender asbestfreier Reibbelag mit einem konventionellen asbesthaltigen Reibbelag höchster Qualitätsstufe in Verhalten und Wirkung bei Testbedingungen verglichen wird, welche den Einsatzbedingungen in der Praxis sehr nahe kommen.

Beispiel 1

Für den konventionellen asbesthaltigen Reibbelag wurden auf der Rückseite trägergestützte Bremsbeläge Typ Nr. 2840687239 Serienbelag der Firma Jurid, 2057 Reinbek, (Ersatzteilbelag für Opel Corsa) eingesetzt.

Für den asbestfreien Reibbelag wurde ein auf der Rückseite trägergestützter Bremsbelag Typ PA 516 B7 der Firma Textar, Leverkusen, eingesetzt, welcher u. a. folgende erfindungswesentliche Komponenten in der üblichen Teilchengröße bis ca. 40 μm enthält:

0,47 Gew.% $TiS_2$
0,92 Gew.% ZnS (Wurtzit-Gitter)
0,30 Gew.% $Ca_3(PO_4)_2$
2,12 Gew.% Graphit (synthetisch)

Als Gegenelement wurden PKW-Bremsscheiben in Serienausführung mit den Abmessungen 234 mm Außendurchmesser, 141 mm Innendurchmesser und 10 mm Dicke verwendet.

Verwendetes tribologisches Modellsystem

Für die Versuchsbedingungen wurde eine kurvenreiche Fahrstrecke zugrundegelegt, bei der durch häufiges Bremsen bei wenig veränderter Geschwindigkeit hohe Temperaturen, abhängig von der Dauer der Be- und Entlastungsphasen, auftreten. Dabei wurde von einer mittleren Fahrgeschwindigkeit von 100 km/h ausgegangen, die einer Relativgeschwindigkeit zwischen Bremsbelag und Scheibe von rd. 10 m/s entspricht. Der Flächenpressungsbereich wurde mit 1 bis 6 N/mm² vorgegeben. Die Bremsfläche betrug 20×30 mm².

Aufbau und Handhabung des Modellsystems, Versuchsbedingungen und -ergebnisse werden nachfolgend anhand der Zeichnung erläutert. In dieser zeigen.

Figur 1 eine zweigeteilte Prinzipskizze des Modellsystems, wobei der links der gestrichelten Trennungslinie liegende Teil I eine Aufsicht auf den mit 3 Bremsbelägen bestückten Belagträger und seine Aufhängung und der rechts der Trennungslinie liegende Teil II einen Querschnitt durch des gesamte Modellsystem vermittelt;

Figur 2 das Versuchsprogramm für Reibungs- und Verschleißuntersuchungen;

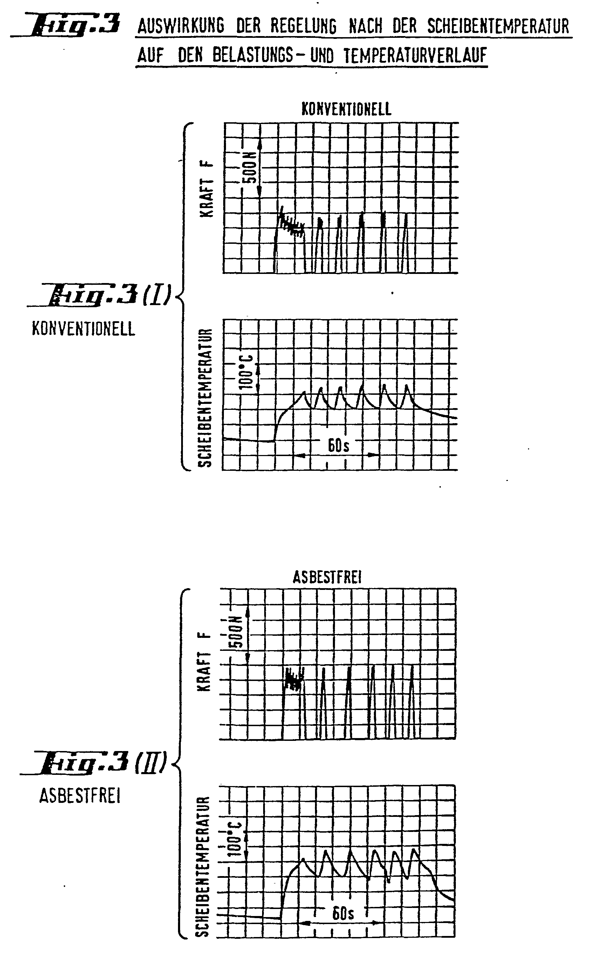

Figur 3 die Auswirkung der Regelung nach der Scheibentemperatur auf den Belastungs- und Temperaturverlauf;

Figur 4 die Temperaturverhältnisse an Scheibe und Belag;

Figur 5 Reibungszahl und Reibungskraft in Abhängigkeit von der Flächenpressung;

Figur 6 Bremszyklen der Reibungsversuche bei 3 N/mm² und 250—300°C und

Figur 7 Verschleiß der Bremsbeläge und Bremsscheiben in Abhängigkeit von der Zahl der Bremsungen.

Aufbau und Handhabung des Modellsystems

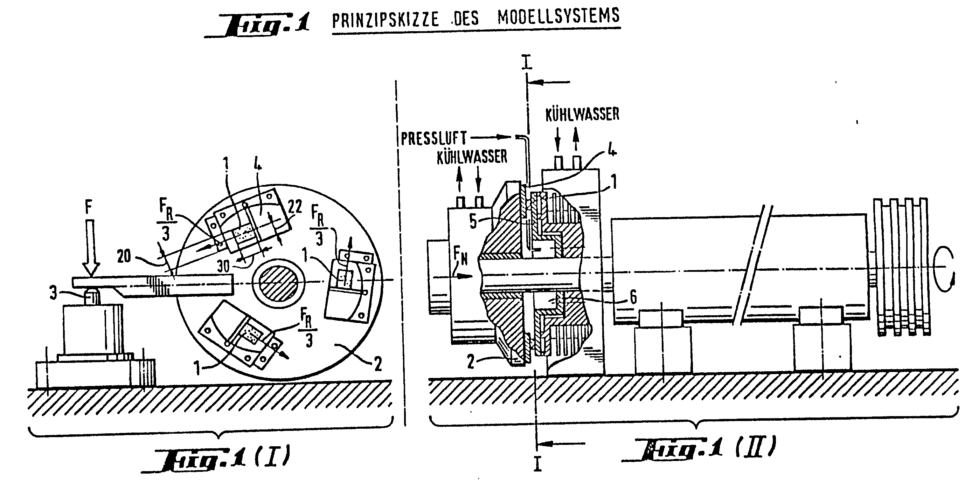

Gemäß Figur 1 sind drei um 120° versetzt angeordnete Bremsbeläge 1 auf einem wassergekühlten Belagträger 2 über einem Paßstift 3 (schwimmend) und zur Abstützung des Bremsmomentes über eine Anschlagleiste 4 befestigt. Sie werden pneumatisch gegen die rotierende Bremsscheibe 5 gepreßt. Die Anlagefläche des Bremsscheibenträgers ist auf zwei schmale Ringstege mit dazwischenliegender Ringnut reduziert, um eine rasche Erwärmung der Bremsscheibe durch zu starke Wärmeabfuhr nicht zu behindern. Eine Wasserkühlung des Scheibenträgers verhindert eine unzulässige Erwärmung der Lagerstellen und begünstigt die Wärmeabfuhr nach dem Bremszyklus. Während der Entlastungsphasen wird Preßluft in den als Topf 6 ausgebildeten Teil der Bremsscheibe 5 geblasen. Dadurch erfolgt zusammen mit der Wärmeabfuhr über das Kühlwasser eine raschere Abkühlung, ähnlich wie beim Fahrzeug durch den Fahrtwind. Aufgrund der Bremsscheibendicke und des nur wenige Sekunden dauernden Bremsvorgangs ist die Aufheizung der gebremsten Scheibenseite durch die prüfmaschinen-bedingte Wärmeableitung praktisch nicht beeinflußt. Die Temperaturregelung zwischen den beiden Grenzwerten wird mit einem auf der Bremsscheibe schleifenden Thermoelement vorgenommen. Die Reibungskraft $F_R$ wird mit Hilfe des Hebelverhältnisses und der mit einer Druckmeßdose registrierten Kraft F ermittelt.

Der Prüfstand wurde so ausgelegt, daß die Versuche zur Ermittlung von Reibung und Verschleiß bei konstanter Gleitgeschwindigkeit von 10,5 m/s, Flächenpressungen zwischen rd. 1 bis 6 N/mm² und Scheibengrenztemperaturen (bzw. Belaggrenztemperaturen) in einstellbaren Bereichen bis zu einer maximalen oberen Grenze von 600°C stufenweise durchgeführt werden können.

Die Zeitdauer der einzelnen Bremsungen bei konstanter Gleitgeschwindigkeit und Flächenpressung ergibt sich aus dem Temperaturanstieg der Scheibe von einer unteren zu einer oberen Grenztemperatur. Bei Erreichen der oberen Grenztemperatur erfolgt Entlastung so lange, bis sich durch Wärmeableitung die untere Grenztemperatur wieder eingestellt hat.

Versuchsbedingungen

Bei den Reibungsversuchen erfolgte die Regelung nach der gemessenen Scheibentemperatur, welche sich im Vergleich zur Regelung nach der gemessenen Belagtemperatur als die maßgebendere, weil systemunabhängig, erwiesen hat. Zusätzlich zur Regelgröße wurde die maximale Temperatur des jeweils anderen Partners mitgemessen.

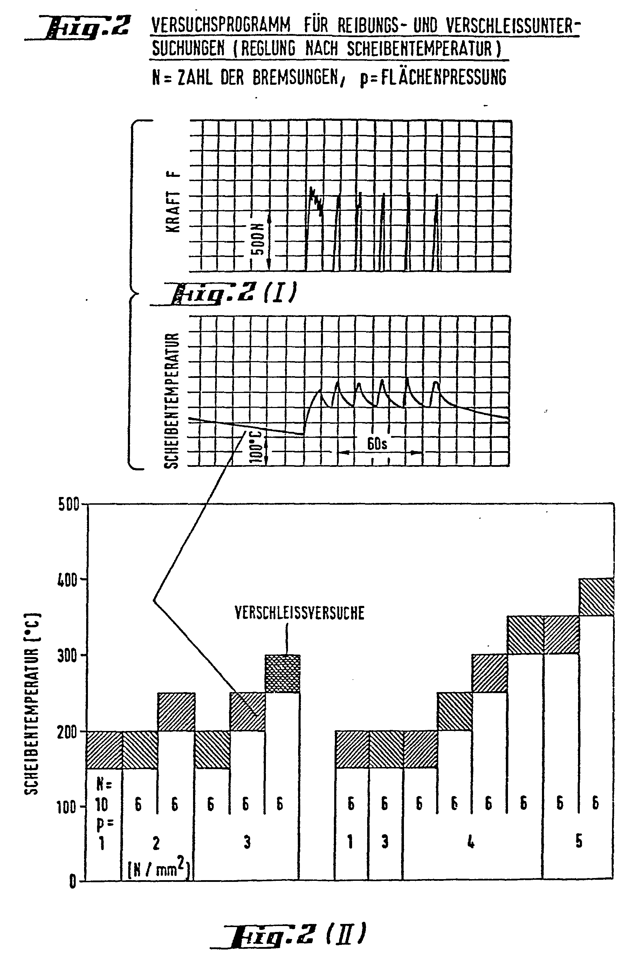

Gemäß Figur 2 wurde der Flächenpressungsbereich auf 1 bis 5 N/mm² und die Scheibengrenztemperaturen auf die Bereiche 150—200°C, 200—250°C, 250—300°C, 300—350°C und 350—400°C ausgedehnt. Wiederholungsversuche mit 1 und 3 N/mm² wurden vorgenommen, um eventuelle Änderungen im Reibungsverhalten aufgrund der vorausgegangenen Bremsungen feststellen zu können. Die Zahl der Bremsungen innerhalb des Parameterfeldes erstreckten sich auf 10 bzw. 6 Bremsungen je Parameterkombination.

Die Bedingungen für die Verschleißversuche wurden auf der Basis der Informationen festgelegt, die aus den Reibungsversuchen gewonnen wurden. Als realistische aber scharfe Beanspruchung wurde eine Flächenpressung von 3 N/mm² gewählt. Die Regelung erfolgte nach der Scheibentemperatur im Bereich von 250—300°C, vgl. Figur 2.

Der Verschleiß der Bremsbeläge wurde intervallweise über die Messung der Belagresthöhe und zur Kontrolle durch Wiegen der Einzelbeläge ermittelt.

Beide Belagsorten wurden unter identischen Bedingungen geprüft. Innerhalb der Reibungs- und Verschleißversuche wurden jeweils für beide Belagarten neue Bremsscheiben verwendet. Bei den Reibungsversuchen betrug der Überstand der Bremsscheibe gegenüber dem Belag 2 mm, bei den Verschließversuchen 3 mm.

Zur Bewertung des Verhaltens des Gesamtsystems Bremsbelag/Bremsscheibe wurden die Temperatur von Belag und Scheibe, die Reibungszahl (bzw. Reibungskraft) sowie der Verschleiß des Bremsbelages herangezogen.

Versuchsergebnisse

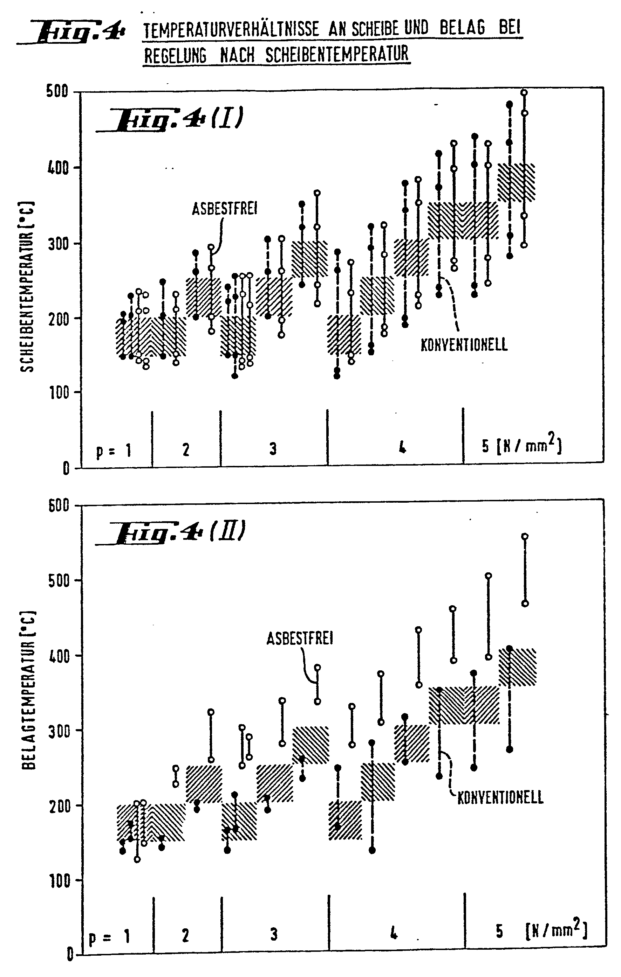

Bei der Auswertung der in den Reibungsversuchen gemessenen Temperaturen wurde gemäß Figur 4 für die jeweilige registrierte Regeltemperatur die obere und untere Grenztemperatur mit ihren Streuungen, für die Temperatur des jeweils anderen Partners nur der obere Grenzwert mit den dabei festgestellten Streuungen den vorgegebenen Temperaturgrenzwerten gegenübergestellt. Aus Figur 4 ist zu entnehmen, daß sich eine deutliche Differenzierung zwischen dem mit dem erfindungsgemäßen Zusatz versehenen asbestfreien Belag und dem konventionellen Belag einstellt. Der asbestfreie Belag ist bei der gewählten Scheibenregelung einer höheren thermischen Belastung ausgesetzt als der konventionelle.

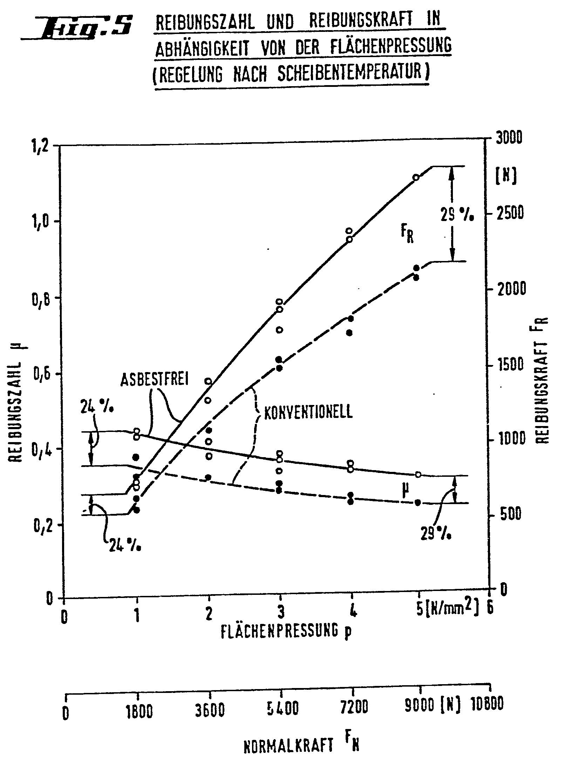

Die Reibungskraft $F_R$—für den asbestfreien Belag durchweg höher als für den konventionellen—steigt mit zunehmender Normalkraft $F_N$ degressiv an (Figur 5). Die daraus resultierenden Reibungszahlen $\mu = F_R/F_N$ nehmen demzufolge ab. Sie verringern sich bei einem Anpreßdruck von p=1 bis 5 N/mm² im Fall des konventionellen Belags von rd. 0,35 auf 0,24 bzw. beim asbestfreien Belag von 0,43 auf 0,31.

Demzufolge ergibt sich, daß der asbestfreie, den erfindungsgemäßen Zusatz enthaltende Belag durchgehend eine deutlich höhere Reibungszahl über den geprüften Belastungsbereich von p=1 bis 5 N/mm² liefert. Bei niedriger Belastung liegt sie um 22,9% und bei höherer Belastung um 29,2% höher.

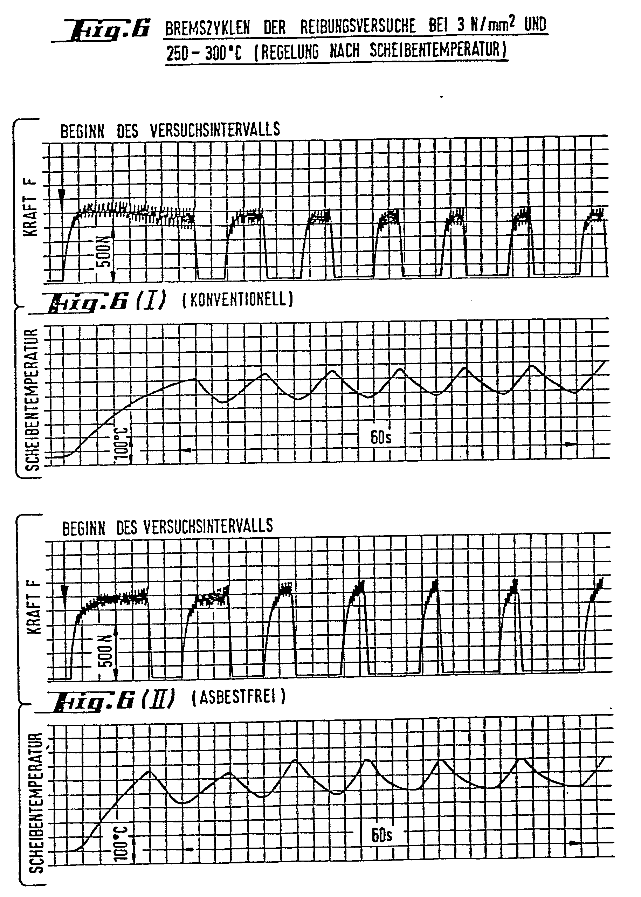

Der bei den Verschleißversuchen sich entsprechend der Flächenpressung von 3 N/mm² und eines Temperaturbereiches von 250—300°C einstellende Belastungs- und Temperaturverlauf ist in Figur 6 wiedergegeben.

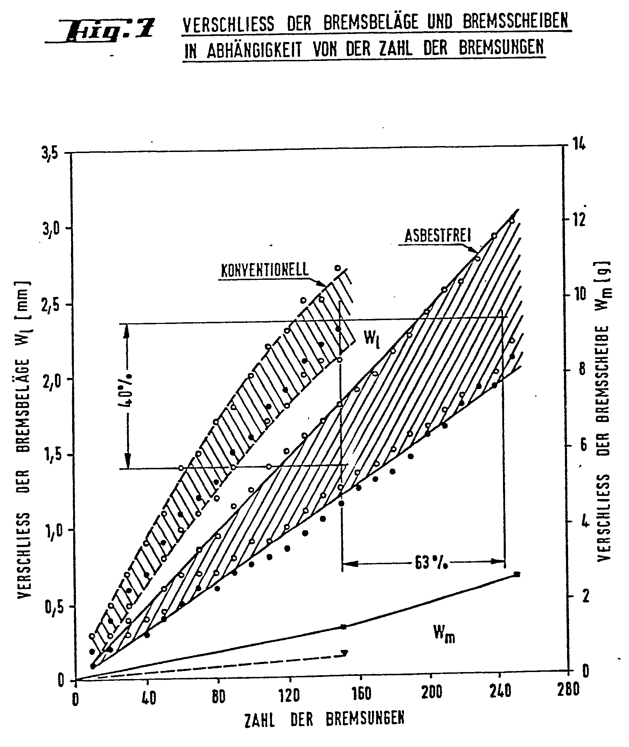

Der Verschleiß der Bremsbeläge zeigt nahezu linearen Zusammenhang mit der Anzahl der Bremsungen und ist beim konventionellen Belag durchweg höher als beim asbestfreien Belag, Figur 7. Das Streuband ist durch den unterschiedlichen Verschleiß der einzelnen Beläge bedingt. Bei 150 Bremsungen wurde mit dem asbestfreien Belag ein um rd. 40% geringerer Verschleiß (arithmetischer Mittelwert der Streubänder bei 150 Bremsungen) ermittelt als mit dem konventionellen Belag. Legt man gleichen Verschleiß (arithmetischer Mittelwert der Streubänder bei gleichem Verschleiß) zugrunde, so können rd. 63% mehr Bremsungen mit dem asbestfreien Belag durchgeführt werden.

Die Massenabnahme der Beläge in Abhängigkeit zur Zahl der Bremsungen ergibt gleichartige Zusammenhänge.

Beispiel 2

Es wird die Wirkung von $TiS_2$ auf Reibverhalten und Verschleiß einer Modellkomposition für asbestfreie Bremsbeläge mit derjenigen von $MoS_2$, eingebracht in eine Modellkomposition für asbesthaltige Beläge, verglichen. Die Teilchengröße betrug für beide Stoffe jeweils bis maximal 40 µm. Der Vergleich wurde hier an einer elektronischen Schmierstoffprüfmaschine (Lubrimeter) der Bauart INCHEM durchgeführt. Dabei erfolgt die Prüfung an einer Materialpaarung, die einer rotierenden Gleitbewegung ausgesetzt ist, wobei die Oberflächengeometrie und damit die Kontaktfläche einer Linienberührung entspricht.

Für den konventionellen, Asbest und $MoS_2$ enthaltenden Bremsbelag A wurde folgende Zusammensetzung verwendet:

Bremsbelag A:

| | |
|---|---|
| $MOS_2$ | 0,80 Gew.% |
| Graphit[1] | 16,24 Gew.% |
| ZnS (Wurtzit-Gitter) | 2,40 Gew.% |
| $Ca_3(PO_4)_2$ | 0,56 Gew.% |
| Phenolharz (Novolacktype)[2] | 20,00 Gew.% |
| Asbest-Fasermehl[3] | 30,00 Gew.% |
| Strahlwollepulver[4] | 30,00 Gew.% |

Fußnote zur Tabelle auf Seite 14:
[1] davon 12,00 Gew.% Naturgraphit Typ AF 96, Graphitwerke Kropfmühl und 4,24 Gew.% synthetischer Graphit Typ KS 44, Fa. Lonza, Basel
[2] Typ RP 229 der Fa. Bakelite, 5860 Iserlohn 7
[3] Faserlänge <1000 µm, Typ FP, Fa. Grolmann
[4] Faserlänge <500 µm, Fa. Eckart-Werke, Fürth
[5] $MoS_2$ natürlich 40 µm, Fa. Starck, Berlin

Herstellung der $MoS_2$-haltigen Bremsbelagmischung und Verarbeitung zum Bremsbelag:

Die verwendeten Rohstoffe in Pulverform wurden innig zu einem homogenen Pulvergemisch gerührt. Das Puvlergemisch wurde mit ca. 10 N/mm² vorgepreßt, um das große Volumen zu reduzieren. Das vorgepreßte Pulverstück wurde nun in einer Form bei ca. 180°C und ca. 25 N/mm² 30 Min. erhitzt, um die Sinterung und Härtung des Phenolharzes zu erzielen. Diese Rohlinge wurden nun entfernt und anschliessend bei 180°C 8 Stunden im Trockenschrank getempert. Die fertigen Rohlinge wurden nun auf das Röllchenmaß für das Lubrimeter auf der Drehbank gefertigt.

Für den asbestfreien Bremsbelag B mit dem erfindungsgemäßen $TiS_2$-Zusatz wurde folgende Zusammensetzung verwendet:

Bremsbelag B:

| | |
|---|---|
| $TiS_2$ | 0,40 Gew.% |
| Graphit (synthetisch) | 2,12 Gew.% |
| ZnS (Wurtzit-Gitter) | 1,20 Gew.% |
| $Ca_3(PO_4)_2$ | 0,28 Gew.% |
| Phenolharz (Novolacktype)[1] | 20,00 Gew.% |
| Messingpulverflocken[2] | 50,00 Gew.% |
| Fasermaterial, organisch[3] | 6,00 Gew.% |
| Glimmerpulver[4] | 20,00 Gew.% |

[1] Typ RP 229 der Fa. Bakelite
[2] Typ Me 70 AS 71 der Fa. Eckart-Werke
[3] Typ Kevelar 29 (Mahlflocken 0,8 mm) der Fa. Schwarzwälder Textil-Werke
[4] <100 µm Typ FDP/4, Fa. Grolmann, Düsseldorf

Da in orientierenden Vorversuchen bereits eine höhere Leistung von $TiS_2$ festgestellt worden war, wurde für die vorgesehenen Vergleichsversuche lediglich die Hälfte der eingesetzten $MoS_2$-Menge an $TiS_2$ angewandt, um die Meßergebnisse in einem einheitlichen Rahmen halten zu können.

Die Herstellung der $TiS_2$-haltigen Bremsbelagmischung und die Verarbeitung zum Bremsbelag erfolgte auf dieselbe Wiese wie bei dem konventionellen Bremsbelag A beschrieben.

Um zu erkennen, ob auch verschiedene Bremsscheibenmaterialien einen Einfluß haben, erstreckten sich die Vergleichsmessungen auf

Graugußmaterial GG 26 (übliches Material)—
Beispiel 2.1
Gehärteter Stahl (Rockwell-Härte 63)—
Beispiel 2.2
Edelstahl V₂A (Hochleistungsmaterial)—
Beispiel 2.3

Aufbau und Handhabung der Versuchseinrichtung, Versuchsbedingungen und -ergebnisse werden nachfolgend anhand eines weiteren Teils der Zeichnung erläutert. In dieser zeigen

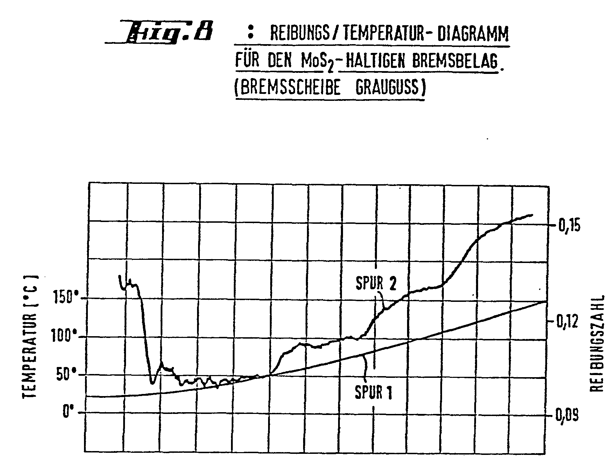

Figur 8 das Reibungs/Temperatur-Diagramm für den $MoS_2$-haltigen Bremsbelag (Bremsscheibe Grauguß);

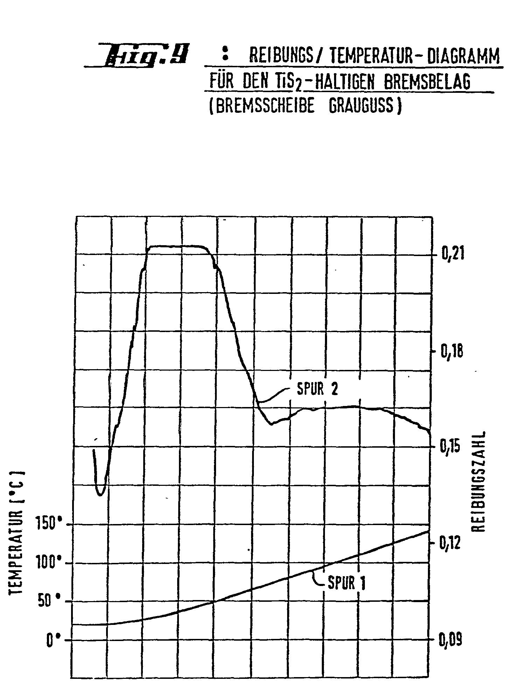

Figur 9 das Reibungs/Temperatur-Diagramm für den $TiS_2$-haltigen Belag (Bremsscheibe wie zu Figur 8 angegeben);

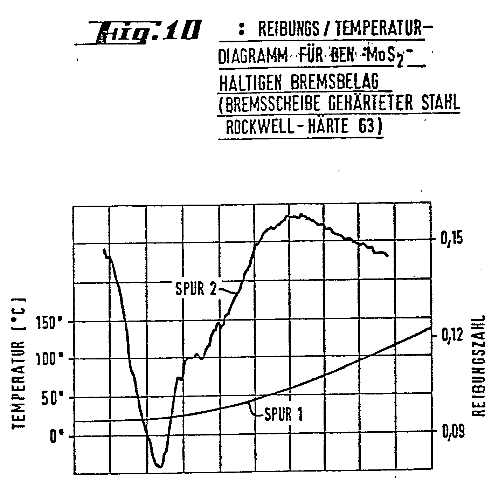

Figur 10 das Reibungs/Temperatur-Diagramm für den $MoS_2$-haltigen Bremsbelag (Bremsscheibe gehärteter Stahl, Rockwell-Härte 63);

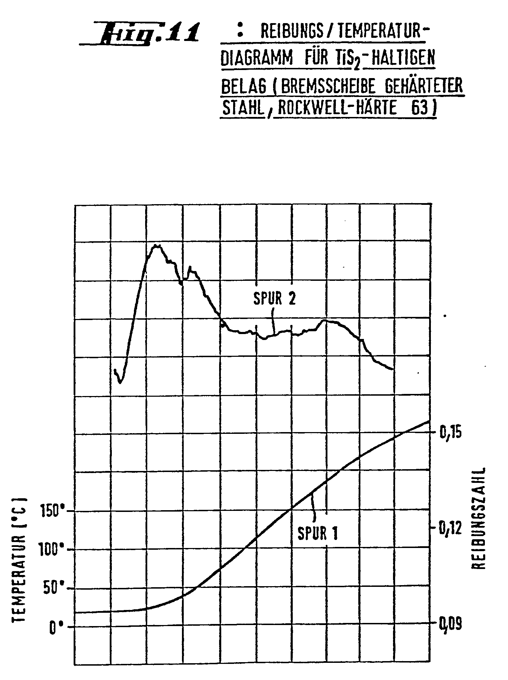

Figur 11 das Reibungs/Temperatur-Diagramm für den $TiS_2$-haltigen Belag (Bremsscheibe wie zu Figur 10 angegeben);

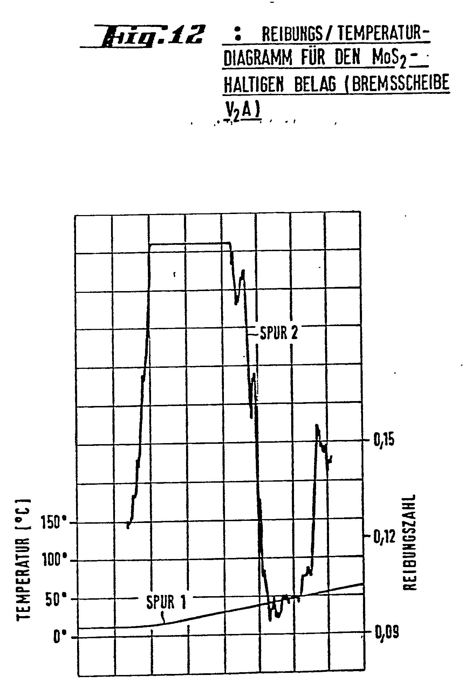

Figur 12 das Reibungs/Temperatur-Diagramm für den $MoS_2$-haltigen Belag (Bremsscheibe V₂A) und

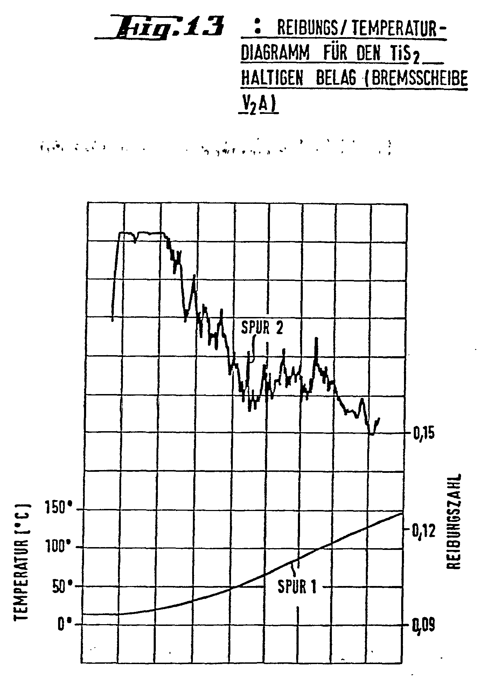

Figur 13 das Reibungs/Temperatur-Diagramm für den $TiS_2$-haltigen Belag (Bremsscheibe wie zu Figur 12 angegeben).

Aufbau und Handhabung der elektronischen Lubrimeter Prüfmaschine, System INCHEM

Zwei feststehende Röllchen aus dem zu prüfenden Belag von 8×12 mm werden gegen einen sich drehenden Bolzen von 24×67,5 mm mit einer vorwählbaren Kraft angedrückt. Die Belastung des Systems ist einstellbar durch Wahl der

Anpreßkraft: Laststufen von 1 bis 10, je 750 N, Umfangsgeschwindigkeit des Bolzens und Reibweg=Prüfdauer.

Die gewählte Kombination der Prüfparameter wird während des Versuchslaufes konstant gehalten. Während des Prüflaufs werden die auf den Prüfkörper wirkenden Reibkräfte und der Temperaturverlauf digital angezeigt und gleichzeitig aufgezeichnet.

Nach Beendigung des Prüflaufs werden die Verschleißmarken der Prüfkörper visuell beurteilt, optisch vermessen und die Oberfläche mechanisch abgetastet.

### Mechanischer Teil

Der Bolzen-Prüfkörper wird zwischen zwei Spitzen auf der Hauptantriebswelle eingespannt. Die Röllchen aus dem zu prüfenden Belag werden in die zur Reibkraftmessung vorgesehene Spannvorrichtung eingespannt. Die Hauptasche wird mittels eines regelbaren Motors angetrieben. Die Anpressung der Prüfröllchen geschieht über Hebelarm und Feder. Die Temperatur an der Reibfläche wird mit einem Thermoelement gemessen.

### Steuerung und Anzeige

| | |
|---|---|
| Drehzahl | 50 bis 1500 min$^{-1}$ |
| Anpreßkraft | 0 bis 7500 N |
| | in 10 Laststufen |
| | à 750 N |

Zur Erfassung von Versuchstemperatur und Reibwertverlauf dient ein 2-Kanal x,y-Schreiber mit einstellbarem Zeitvorschub.

Zur Messung der Verschleiß- und Rauhtiefe dient ein Oberflächen-Tastgerät.

Die Profilogramme können direkt ausgewertet werden. Die Verschleißmarken auf den Röllchen werden in mm gemessen und mittels Tabelle auf Abrieb in mg umgerechnet.

### Prüfkörper

Die einfache Prüfkörperform (Röllchen) gestattet eine Fertigung der Prüfkörper aus den Bremsbelag-Werkstoffen mit geringem Aufwand.

### Durchführung der Prüfung

Die Prüfkörper werden in Siedegrenzbenzin 2 DIN 51 636 sorgfältig gereinigt und getrocknet. In die gereinigten Probenhalter werden die Prüfkörper eingespannt. Die Drehzahl der Hauptachse wird eingestellt und danach die vorgewählte Last aufgebracht. Der Prüflauf wird nach Erreichen der eingegebenen Laufzeit automatisch beendet. Nach dem Versuchslauf werden die Prüfkörper gereinigt und vermessen.

### Beispiel 2.1

Zur Ermittlung von Unterschieden im Reib-, Verschleiß- und Temperaturverhalten wurde auf dem Lubrimeter folgender Vergleichsversuch durchgeführt:

Versuchsbedingungen:

| | |
|---|---|
| Laststufe: | 1 (750 N) |
| Drehzahl: | 1400 upm |
| (=ca. 1,75 m/sec. Gleitgeschwindigkeit) | |

Material des Bolzens: Bremsscheibenmaterial aus Grauguß
Material der Rollen:
    A) $MoS_2$-haltiger Belag
    B) $TiS_2$-haltiger Belag

Das Lubrimeter wurde bei Raumtemperatur auf die Nenndrehzahl gebracht. Dann wurde die Last aufgelegt und erst beim Erreichen von 150°C Bolzentemperatur wieder zurückgenommen. Dieser Versuch wurde mit dem Bolzen je zweimal, mit den Rollen je einmal durchgeführt. Nach jedem Versuch wurden die Prüfkörper ausgebaut und neu vermessen.

Versuchsergebnisse:

Aufgrund von Rauhtiefenmessungen am Bolzen vor und nach der Reibbeanspruchung seitens der aus den zu vergleichenden Belägen gefertigten Röllchen wurde der Mittenrauhwert $R_a$ und die gemittelte Rauhtiefe $R_z$ erfaßt. Der Mittenrauhwert ist der arithmetische Mittelwert aller Abstände des Rauhtiefenprofils R von dessen Mittellinie, die gemittelte Rauhtiefe der Mittelwert aus den Einzelrauhtiefen fünf aufeinanderfolgender Einzelmeßstrecken.

Weiterhin wurde die Verschleißbreite an den Prüfkörpern aus den zu vergleichenden Bremsbelagmaterialien ermittelt; gemessen wird dabei die Verschleißreite, die sich im Durchschnitt durch Verschleiß von Linie auf Fläche ergibt.

Ferner wurden die Reibungs/Temperatur-Diagramme für die beiden Bremsbelagkompositionen aufgenommen.

1. Rauhtiefe am Bolzen

| | | |
|---|---|---|
| vor Reibversuch | $R_a$ | 1.93 µm |
| | $R_z$ | 12.18 µm |
| nach Reibversuch | | |
| mit $MoS_2$-haltigem Belag | $R_a$ | 0.91 µm |
| | $R_z$ | 6.51 µm |
| mit $TiS_2$-haltigem Belag | $R_a$ | 1.30 µm |
| | $R_z$ | 9.54 µm |

2. Durchschnittliche Verschleißbreite an den Bremsbelag-Prüfkörpern

| | |
|---|---|
| $MoS_2$-haltiger Belag | 2.3 mm |
| $TiS_2$-haltiger Belag | 2.4 mm |

3. Reibungs/Temperatur-Diagramme

Figur 8 gibt die Relation zwischen Reibungszahl und Temperatur beim $MoS_2$-haltigen Belag und Figur 9 die genannte Relation beim $TiS_2$-haltigen Belag an. In den Diagrammen entspricht ein Papiervorschub von 1 cm einer Zeit von 3 sec.

Spur 1 zeigt den Temperaturverlauf
(1 cm≙50°C);
Spur 2 zeigt den Verlauf der Reibungszahl
(1 cm≙0.012).

Bei etwa gleichem Verschleiß am Bremsbelagmaterial und etwa gleicher Rauhigkeit am Bremsscheibenmaterial zeigt der $TiS_2$-Belag bis zu 50% höhere, sowie wesentlich schneller ansteigende Reibungswerte.

Dieses Ergebnis läßt bei Gefahrbremsungen wesentlich bessere Verzögerungszeiten erwarten, nachdem die volle Reibleistung beim $TiS_2$-Belag nach durchschnittlich 6,3 sec., beim $MoS_2$-Belag erst nach durchschnittlich 31,5 sec. erreicht wird.

Beispiel 2.2
Zur Ermittlung von Unterschieden im Reib-, Verschleiß- und Temperaturverhalten wurde auf dem Lubrimeter folgender Vergleichsversuch durchgeführt:

Versuchsbedingungen:

Laststufe:        1 (750 N)
Drehzahl:         1400 upm
(=ca. 1,75 m/sec. Gleitgeschwindigkeit)

Material des Bolzens: Einsatzstahl (15Cr3) gehärtet
Material der Rollen:
A) $MoS_2$-haltiger Belag
B) $TiS_2$-haltiger Belag

Das Lubrimeter wurde bei Raumtemperatur auf die Nenndrehzahl gebracht. Dann wurde die Last aufgelegt und nach 22,5 sec. Laufzeit wieder zurückgenommen. Dieser Versuch wurde mit dem Bolzen und den Rollen je einmal durchgeführt. Danach wurden die Prüfkörper ausgebaut und neu vermessen.

Versuchsergebnisse:
Es wurden wieder die Rauhtiefe am Bolzen vor und nach Beanspruchung, die Verschleißbreite an den Bremsbelag-Prüfkörpern und die Riebungs/ Temperatur-Diagramme aufgenommen.

1. Rautiefe am Bolzen
   vor Reibversuch          $R_a$  0.70 μm
                            $R_z$  6.00 μm

   nach Reibversuch
   mit $MoS_2$-haltigem Belag  $R_a$  0.70 μm
                            $R_z$  5.90 μm

   mit $TiS_2$-haltigem Belag  $R_a$  0.80 μm
                            $R_z$  6.40 μm

2. Durchschnittliche Verschleißbreite an den Bremsbelag-Prüfkörpern

$MoS_2$-haltiger Belag        2.0 mm
$TiS_2$-haltiger Belag        2.6 mm

3. Reibungs/Temperatur-Diagramme
Figur 10 gibt die Relation zwischen Reibungszahl und Temperatur beim $MoS_2$-haltigen Belag und Figur 11 die genannte Relation beim $TiS_2$-haltigen Belag an. In den Diagrammen entspricht ein Papiervorschub von 1 cm einer Zeit von 3 sec.
Spur 1 zeigt den Temperaturverlauf
(1 cm≙50°C);
Spur 2 zeigt den Verlauf der Reibungszahl
(1 cm≙0.012).

Bei etwa gleicher Rauhtiefe aber etwas größerem Verschleiß zeigt der $TiS_2$-Belag mehr als 30% höhere sowie wesentlich schneller ansteigende Reibungswerte.

Dieses Ergebnis läßt bei Gefahrbremsungen wesentlich bessere Verzögerungszeiten erwarten, nachdem die volle Reibleistung beim $TiS_2$-Belag nach ca. 3 sec., beim $MoS_2$-Belag nach ca. 16,5 sec. erreicht wird.

Beispiel 2.3
Zur Ermittlung von Unterschieden im Reib-, Verschleiß- und Temperaturverhalten wurde auf dem Lubrimeter folgender Vergleichsversuche durchgeführt:

Versuchsbedingungen:

Laststufe:        1 (750 N)
Drehzahl:         1400 upm
(=ca. 1,75 m/zec. Gleitgeschwindigkeit)

Material des Bolzens: rostfreier Stahl (V2A)
Material der Rollen:
A) $MoS_2$-haltiger Belag
B) $TiS_2$-haltiger Belag

Das Lubrimeter wurde bei Raumtemperatur auf die Nenndrehzahl gebracht. Dann wurde die Last aufgelegt und nach 22,5 sec. Laufzeit wieder zurückgenommen. Dieser Versuch wurde mit dem Bolzen und den Rollen je einmal durchgeführt. Danach wurden die Prüfkörper ausgebaut und neu vermessen.

Der Versuch mit dem $MoS_2$-Belag mußte nach 17 sec. abgebrochen werden, da wegen zu schnellem Verschleiß bzw. wegen Fressens des Belages die Gefahr einer Beschädigung des Lubrimeters bestand.

Versuchsergebnisse:
Es wurden wieder die Rauhtiefe am Bolzen vor und nach Beanspruchung, die Verschleißbreite an den Bremsbelag-Prüfkörpern und die Reibungs/ Temperatur-Diagramme aufgenommen.

1. Rauhteife am Bolzen
vor Reibversuch      $R_a$    1.10 μm
                         $R_z$    0.30 μm

nach Reibversuch
mit MoS₂-haltigem Belag    $R_a$    5.40 μm
                                 $R_z$    28.40 μm

mit TiS₂-haltigem Belag    $R_a$    6.60 μm
                                 $R_z$    35.70 μm

2. Durchschnittliche Verschleißbreite an den Bremsbelag-Prüfkörpern

MoS₂-haltiger Belag      4.4 mm
TiS₂-haltiger Belag      4.3 mm

3. Reibungs/Temperatur-Diagramme
Figur 12 gibt die Relation zwischen Reibungszahl und Temperatur beim MoS₂-haltigen Belag und Figur 13 die genannte Relation beim TiS₂-haltigen Belag an. In den Diagrammen entspricht ein Papiervorschub von 1 cm einer Zeit von 3 sec.
Spur 1 zeigt den Temperaturverlauf
     (1 cm≙50°C);
Spur 2 zeigt den Verlauf der Reibungszahl
     (1 cm≙0.012).
Bei wesentlich langsamerem Verschleiß des Belagmaterials zeigt der TiS₂-haltige Belag ein auf längere Zeit konstantes Reibungsverhalten. Ein direkter Vergleich der vorstehend aufgeführten Verschleißdaten ist jedoch nicht möglich, da bei dem Versuch mit dem MoS₂-Belag der noch erfaßbare Grenzverschleiß bereits nach 75% der Laufzeit des TiS₂-Belages ermittelt wurde.

**Patentansprüche**

1. Reibungs- und abriebsteuernder Zusatz für Reibbelagmischungen, dadurch gekennzeichnet, daß er ganz oder teilweise aus TiS₂ besteht.

2. Zusatz nach Anspruch 1, dadurch gekennzeichnet, daß er aus einer Mischung von TiS₂ mit einem Sulfid der 2. Nebengruppe des Periodensystems, einem Phosphat des Magnesiums, Calciums, Bors, Aluminiums, Kupfers oder Eisens und synthetischem Graphit besteht.

3. Zusatz nach Anspruch 2, dadurch gekennzeichnet, daß das Sulfid ZnS mit Wurtzit-Gitter und das Phosphat Ca₃(PO₄)₂ ist.

4. Zusatz nach Anspruch 2 oder 3, dadurch gekennzeichnet, daß die Mischung

     5—30 Gew.% TiS₂
     10—30 Gew.% ZnS (Wurtzit-Gitter)
     5—30 Gew.% Ca₃(PO₄)₂
     10—80 Gew.% Graphit (synthetisch)

enthält.

5. Zusatz nach Anspruch 2 oder 3, dadurch gekennzeichnet, daß die Mischung

     10—15 Gew.% TiS₂
     10—30 Gew.% ZnS (Wurtzit-Gitter)
     10—15 Gew.% Ca₃(PO₄)₂
     40—70 Gew.% Graphit (synthetisch)

enthält.

6. Zusatz nach Anspruch 2 oder 3, dadurch gekennzeichnet, daß die Mischung

     8—12 Gew.% TiS₂
     20—25 Gew.% ZnS (Wurtzit-Gitter)
     8—12 Gew.% Ca₃(PO₄)₂
     51—64 Gew.% Graphit (synthetisch)

enthält.

7. Zusatz nach einem der vorhergehenden Ansprüche, dadurch gekennzeichnet, daß er in asbestfreien Reibbelagmischungen und Reibbelägen verwendet wird.

**Revendications**

1. Additif qui permet de contrôler la friction et l'usure des mélanges de garniture soumis à la friction, caractérisé en ce qu'il se compose partiellement ou totalement de S₂Ti.

2. Additif selon la revendication 1, caractérisé en ce qu'il se compose d'un mélange de S₂Ti avec un sulfure du deuxième sous-groupe du système périodique, d'un phosphate de magnésium, de calcium, de bore, d'aluminium, de cuivre, ou de fer et de graphite synthétique.

3. Additif selon la revendication 2, caractérisé en ce que le sulfure SZn est une structure de Wurtzite et que le phosphate est (PO₄)₂Ca₃.

4. Additif selon la revendication 2 ou la revendication 3, caractérisé en ce que le mélange contient:

     5 à 30% en poids de S₂Ti
     10 à 30% en poids de SZn (structure de Wurtzite)
     5 à 30% en poids de (PO₄)₂Ca₃
     10 à 80% en poids de graphite (synthétique).

5. Additif selon la revendication 2 ou la revendication 3, caractérisé en ce que le mélange contient:

     10 à 15% en poids de S₂Ti
     10 à 30% en poids de SZn (structure de Wurtzite)
     10 à 15% en poids de (PO₄)₂Ca₃
     40 à 70% en poids de graphite (synthétique).

6. Additif selon la revendication 2 ou la revendication 3, caractérisé en ce que le mélange contient:

8 à 12% en poids de S₂Ti
20 à 25% en poids de SZn (structure
de Wurtzite)
8 à 12% en poids de (PO₄)₂Ca₃
51 à 64% en poids de graphite
(synthétique).

7. Additif selon l'une des revendications précédentes, caractérisé en ce qu'il est utilisé dans les mélanges destinés aux garnitures de friction sans aimante et aux garnitures de friction.

**Claims**

1. A friction- and abrasion-controlling additive for friction lining mixtures, characterized in that it consists completely or partly of $TiS_2$.

2. An additive as claimed in claim 1, characterized in that it consists of a mixture of $TiS_2$ with a sulfide of the 2nd secondary group of the periodic system, a phosphate of magnesium, calcium, boron, aluminium, copper or iron and synthetic graphite.

3. An additive as claimed in claim 2, characterized in that the sulfide is ZnS with a wurtzite lattice and the phosphate is $Ca_3(PO_4)_2$.

4. An additive as claimed in claim 2 or 3, characterized in that the mixture contains

5 to 30% by weight $TiS_2$
10 to 30% by weight ZnS (wurtzite
lattice)
5 to 30% by weight $Ca_3(PO_4)_2$
10 to 80% by weight graphite
(synthetic).

5. An additive as claimed in claim 2 or 3, characterized in that the mixture contains

10 to 15% by weight $TiS_2$
10 to 30% by weight ZnS (wurtzite
lattice)
10 to 15% by weight $Ca_3(PO_4)_2$
40 to 70% by weight graphite
(synthetic).

6. An additive as claimed in claim 2 or 3, characterized in that the mixture contains

8 to 12% by weight $TiS_2$
20 to 25% by weight ZnS (wurtzite
lattice)
8 to 12% by weight $Ca_3(PO_4)_2$
51 to 64% by weight graphite
(synthetic).

7. An additive as claimed in any of the preceding claims, characterized in that it is used in asbestos-free friction lining mixtures and friction linings.

*Fig.1* PRINZIPSKIZZE DES MODELLSYSTEMS

*Fig.1* (I)

*Fig.1* (II)

KÜHLWASSER

PRESSLUFT
KÜHLWASSER

$F_N$

$F$

$\frac{F_R}{3}$

$\frac{F_R}{3}$

$\frac{F_R}{3}$

EP 0 170 176 B1

**Fig.2** VERSUCHSPROGRAMM FÜR REIBUNGS- UND VERSCHLEISSUNTER-
SUCHUNGEN (REGLUNG NACH SCHEIBENTEMPERATUR)
N = ZAHL DER BREMSUNGEN, p=FLÄCHENPRESSUNG

KRAFT F

500 N

**Fig.2 (I)**

SCHEIBENTEMPERATUR

100°C

60s

SCHEIBENTEMPERATUR [°C]

500

400

VERSCHLEISSVERSUCHE

300

200

N=
10
p=
1

6   6

2
[N / mm²]

6   6   6

3

6   6

1   3

6   6   6

4

6   6

5

100

0

**Fig.2 (II)**

**Fig. 3** AUSWIRKUNG DER REGELUNG NACH DER SCHEIBENTEMPERATUR AUF DEN BELASTUNGS- UND TEMPERATURVERLAUF

**Fig. 3 (I)** KONVENTIONELL

**Fig. 3 (II)** ASBESTFREI

**Fig. 4** TEMPERATURVERHÄLTNISSE AN SCHEIBE UND BELAG BEI REGELUNG NACH SCHEIBENTEMPERATUR

Fig. 4 (I)

Fig. 4 (II)

**Fig. 5** REIBUNGSZAHL UND REIBUNGSKRAFT IN ABHÄNGIGKEIT VON DER FLÄCHENPRESSUNG (REGELUNG NACH SCHEIBENTEMPERATUR)

**Fig. 6** BREMSZYKLEN DER REIBUNGSVERSUCHE BEI 3 N/mm² UND 250 – 300°C (REGELUNG NACH SCHEIBENTEMPERATUR)

BEGINN DES VERSUCHSINTERVALLS

KRAFT F

500 N

**Fig. 6 (I)** (KONVENTIONELL)

SCHEIBENTEMPERATUR

100°C

60s

BEGINN DES VERSUCHSINTERVALLS

KRAFT F

500 N

**Fig. 6 (II)** (ASBESTFREI)

SCHEIBENTEMPERATUR

100°C

60s

6

EP 0 170 176 B1

**Fig. 1** — VERSCHLIESS DER BREMSBELÄGE UND BREMSSCHEIBEN IN ABHÄNGIGKEIT VON DER ZAHL DER BREMSUNGEN

_Fig. 8_ : REIBUNGS / TEMPERATUR- DIAGRAMM
FÜR DEN $MoS_2$-HALTIGEN BREMSBELAG.
(BREMSSCHEIBE GRAUGUSS)

*Fig.9* : REIBUNGS/TEMPERATUR-DIAGRAMM
FÜR DEN $TiS_2$-HALTIGEN BREMSBELAG
(BREMSSCHEIBE GRAUGUSS)

**Fig.10** : REIBUNGS / TEMPERATUR-
DIAGRAMM FÜR DEN MoS$_2$-
HALTIGEN BREMSBELAG
(BREMSSCHEIBE GEHÄRTETER STAHL
ROCKWELL-HÄRTE 63)

*Fig.11* : REIBUNGS / TEMPERATUR-
DIAGRAMM FÜR $TiS_2$-HALTIGEN
BELAG (BREMSSCHEIBE GEHÄRTETER
STAHL, ROCKWELL-HÄRTE 63)

*Fig.12* : REIBUNGS / TEMPERATUR-
DIAGRAMM FÜR DEN MoS$_2$ -
HALTIGEN BELAG (BREMSSCHEIBE
V$_2$A)

**_Fig. 13_** : REIBUNGS / TEMPERATUR -
DIAGRAMM FÜR DEN TiS$_2$
HALTIGEN BELAG (BREMSSCHEIBE
V$_2$A)